# EUROPEAN PATENT SPECIFICATION

(11) **EP 4 655 597 B1**
(45) Date of publication and mention of the grant of the patent: **08.07.2026**
(21) Application number: 24731235.8
(22) Date of filing: 08.05.2024
(51) Int. Cl.: G01N 35/02, G01N 35/04, B65G 47/57, B65G 47/64

(54) **MODULAR RACK LIFTING EQUIPMENT AND RACK LIFTING SYSTEM**
MODULARE REGALHEBEAUSRÜSTUNG UND REGALHEBESYSTEM
ÉQUIPEMENT DE LEVAGE DE BÂTI MODULAIRE ET SYSTÈME DE LEVAGE DE BÂTI

(30) Priority: 19.05.2023 JP 2023082836
(43) Date of publication of application: 03.12.2025
(73) Proprietor: Roche Diagnostics GmbH, 68305 Mannheim (DE); Roche Diagnostics International AG, 6343 Rotkreuz (CH)
(72) Inventor: UNTERNAEHRER, Silvio, 6343 Rotkreuz (CH); SAKATA, Kentaro, Tokyo 105-6409 (JP); SOENTGES, Stefan, 71636 Ludwigsburg (DE); ARNOLD, Daniel, 6343 Rotkreuz (CH); HENNING, Jens, 71636 Ludwigsburg (DE); TAKANO, Dai, Tokyo 105-6409 (JP); HOLLANDER, Bauke Sjoerd, 6343 Rotkreuz (CH); TAKAHASHI, Masaki, Tokyo 105-6409 (JP); KAEPPELI, Marcel, 6343 Rotkreuz (CH)
(74) Representative: Keinhorst, Volker Gerhard
(86) International application number: PCT/EP2024/062739
(87) International publication number: WO 2024/240502

(56) References cited:
- WO-A1-2022/043464
- JP-A- 2019 194 578
- US-A1- 2019 376 989
- US-A1- 2022 011 332

## Description

### Technical field

The present invention relates to a modular rack lifting equipment and rack lifting system for transporting racks holding sample containers.

### Prior art

Automatic analysis equipment for qualitatively or quantitatively analysing biological samples of blood plasma, blood serum, urine, etc. is in widespread use in hospitals, as well as in test centres that receive requests for analysis from hospitals. The results of the biological specimen analysis are vital for diagnosing disease. In addition, in order to ensure efficient progress with analyses on the automatic analysis equipment, specimen conveying systems that automatically transport samples to a plurality of automatic analysis equipment are also widely used.

Furthermore, specimen testing systems that combine pre-processing equipment, such as centrifuges for separating blood serum and dispensers for subdividing specimens from parent containers to child containers, are widely used with sample conveying systems, especially by big hospitals and large-scale testing centres.

In the interests of transport efficiency, rack conveying equipment is often employed. Such equipment includes sample racks (abbreviated to "racks" below) which can hold and transport multiple sample containers.

Rack conveying equipment commonly includes, for example, a pair of guide rails provided along a predetermined conveyor path, and a belt conveyor that is provided between the guide rails and feeds in a predetermined direction.

If a plurality of conveyor lines are provided, they can be lined up within a horizontal area. When there are a large number of horizontally feeding conveyor lines, a problem arises in that the area occupied by the conveyor line installations grows large, leaving less free space in the room to install the sample processing system.

As a means to solve this problem, patent document 1 proposes holder conveyor equipment equipped with an elevator device, the elevator device including: an ascending and descending chain as a feed member disposed along a circulatory ascending and descending loop that has vertically extending ascending and descending paths; and a plurality of supporting plates supporting holders that hold sample containers in an upright state and are attached to the feed member

### Prior art documents

### Patent documents

Patent document JP 2019-194578 A discloses Apparatus for transporting holder for holding sample container, has transport mechanism for conveying holder along transport line that is arranged adjacent to support portion presented in ascending and descending path of lift device.

Patent document WO 2022043464 relates to a temporary store for buffering and feeding piece goods-like foods from production to packaging by means of peripherally circulating product carrier baskets, consisting of an inlet region and an outlet region for the loading and unloading of the product carrier baskets and accumulating sections connected therebetween for filled and emptied product carrier baskets. The accumulating sections are arranged on top of each other and overhead.

Patent document US2022 0011332 discloses a module for an automated biology laboratory system includes a housing and a storage device located within the housing. The storage device has a plurality of plate slots for receiving microplates or lab-ware with a microplate footprint or containers. The laboratory system further includes a transfer slot to transfer the microplates or containers between an inside of the module and an outside of the module; indexing means to facilitate alignment of the transfer slot with a microplate transfer interface comprising an aperture of the housing; and connection means for fixedly connecting the transfer interface of the module to a transfer interface of an adjacent module.

### Summary of the invention

### Problems to be solved by the invention

In the holder conveyor equipment according to patent document 1, although the elevator device can convey holders vertically, movement of the rack in the vertical direction is dependent on the designed height of the elevator, and the height cannot be changed according to the installation location. As such it is difficult to flexibly construct conveyor paths.

The purpose of the present invention is to provide modular rack lifting equipment and a rack lifting system which allow the conveyor path to be flexibly extended in the height direction, and which can convey racks carrying sample containers in the vertical direction.

### Means for solving the problem

To achieve the above purpose, the modular rack lifting equipment of the present invention includes: a lifting unit including a basket loadable with a rack for holding sample containers and a drive mechanism for lifting and lowering the basket; a conveyor unit including a conveyor portion for conveying racks in a horizontal direction and a traverser for moving the racks loaded into the basket to the conveyor portion; and a support body for supporting the lifting unit and the conveyor unit, characterised in that a plurality of modular rack lifting equipment are configured in a linkable manner, so that the conveyor path is flexibly extended in the height direction.

### Effect of the invention

According to the present invention, is possible to provide a modular rack lifting device and rack lifting system which allow the conveyor path to be flexibly extended in the height direction, and which can convey racks carrying sample containers in the vertical direction.

### [Brief description of the drawings]

FIG. 1 is a front view and cross-sectional view of the modular rack lifting equipment according to an embodiment of the present invention.
FIG. 2A is a front view of the changeover of a sample rack in the modular rack lifting equipment shown in FIG. 1.
FIG. 2B is an oblique view of the changeover of the sample rack in the modular rack lifting equipment shown in FIG. 1.
FIG. 3 shows a belt lift-up prevention mechanism of the conveyor portion of the modular rack lifting equipment shown in FIG. 1.
FIG. 4 is a partial view of a structure formed when pieces of the modular rack lifting equipment shown in FIG. 1 are linked together.
FIG. 5 shows a height position adjustment mechanism for the conveyor unit of the modular rack lifting equipment shown in FIG. 1.
FIG. 6 shows a rack lifting system composed of linked pieces of the modular rack lifting equipment in which the heights have been changed using the height position adjustment mechanism of the conveyor unit of the modular rack lifting equipment shown in FIG. 5.
FIG. 7 shows an example layout of a rack lifting system in which a plurality of modular rack lifting equipment has been linked.

### Embodiments of the invention

Embodiments of the present invention are described in detail below with reference to the applicable drawings.

In the drawings, identical and similar elements are denoted using the same symbols. Duplicate explanations of such elements have been omitted. Note also that, as a matter of course, the scope of rights of this application is not limited to the embodiments described, but is determined based on the invention described in the claims of this application underpinned by the descriptions in the specification.

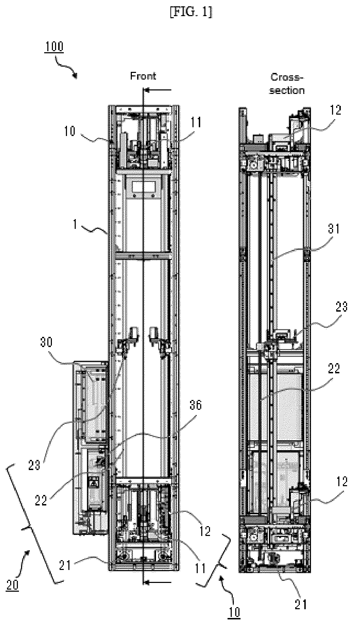

FIG. 1 shows the structure of modular rack lifting equipment 100 according to an embodiment of the present invention. The modular rack lifting equipment 100 includes a lifting unit 20 and a conveyor unit 10 on a support body 1. The lifting unit 20 is configured from a basket 23, on which can be mounted a sample rack 32 capable of holding five sample containers. The basket 23 is moved up and down along vertically provided guide rails 31 by a belt drive 22 and a motor 21.

The guide rails 31 may be a single rail or multiple rails, and can be installed for the purpose of both lifting and lowering the racks. The basket 23 is attached in such a way that it moves along each of the guide rails 31. The motor 21 is fixedly fitted to the support body 1, and is constructed so as only to lift and lower the basket 23.

The conveyor unit 10 is a unit for conveying the racks in a horizontal direction. Conveyor units 10 are arranged at both the top level and bottom level of each unit of the modular lifting rack equipment 100. The conveyor unit 10 includes a conveyor portion 11 configured using a belt or the like that conveys the sample rack 32 towards a predetermined conveyor path and a traverser 12, this being a mechanism for moving the sample rack 32, which has ascended or descended in the basket 23, out of the basket 23 and placing it on the conveyor portion 11, and/or moving the sample rack from the conveyor portion 11 and placing into basket 23.

The sample rack 32 is conveyed in the height direction by the lifting unit 20, transferred upon arriving at the destination to the conveyor portion 11 by the traverser 12, and then discharged from the conveyor portion 11 onto a predetermined conveyor path. A motor 21 of the lifting unit 20, the conveyor portion 11 of the conveyor unit 10 and the traverser 12 are controlled by a control portion 30, and the control portion 30 is connected to a power supply 36.

From the perspective of curbing cost, ease installation and the like, the height-wise size of the modular rack lifting equipment described with reference to FIG. 1 is preferably uniform. For example, said height could be around 2 m. However, it goes without saying that the module height can be set as appropriate in consideration of ease of production, transport, installation, etc., of said modular rack lifting equipment.

In addition, the conveyor unit 10 within the modular rack lifting equipment 100 can be arranged on the upper or lower level as appropriate and without restriction.

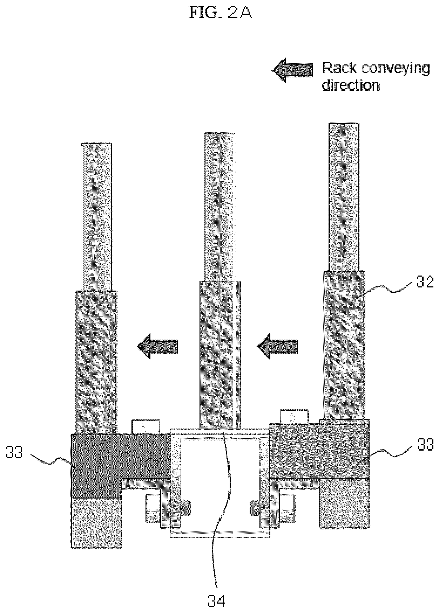

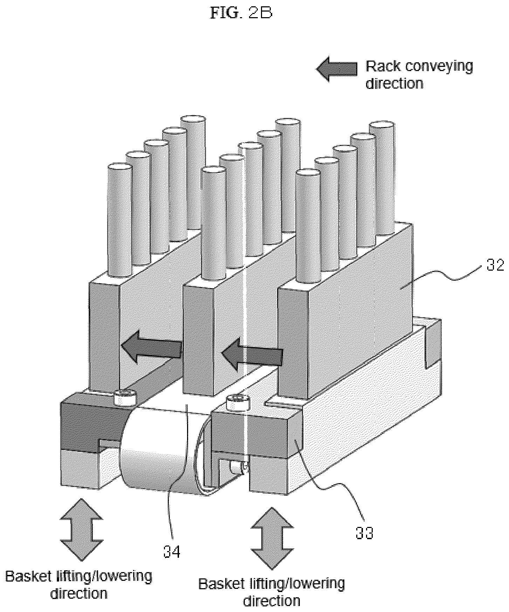

FIG. 2A and 2B (hereinafter referred to collectively as FIG. 2) show a changeover of the sample rack 32 in the modular rack lifting equipment 100. The sample rack 32 is moved from an upper location to a lower location in the basket 23 positioned to the right-hand side, which is not depicted the drawing. Then, as shown in FIG. 1, the sample rack 32 is moved horizontally by the traverser 12 and transferred to the conveyor portion 11.

When the sample rack 32 is fed by the traverser 12 from the basket 23 to the conveyor portion 11 or from the conveyor portion 11 to the basket 23, any height difference can cause the rack 32 to snag and tip over, preventing the transfer and damaging the samples themselves.

By contrast, the modular rack lifting equipment 100 according to the present invention includes a step block 33 for providing a slightly high or low step in accordance with the movement direction. A plurality of the step blocks 33 with different heights are prepared in advance, and the various step blocks 33 are then employed as appropriate to easily adjust the height-direction in accordance with the direction of transfer of the sample rack 32, thus enabling a suppression of tip-over of the sample rack 32.

In the example illustrated in FIG. 2, in order to transfer from the basket 23 on the right-hand side to a conveyor belt 34 of the central conveyor portion 11, a step block 33 is provided to position the stop surface of the sample rack 32, shown on the right hand side, slightly higher than the surface of the conveyor portion 11. Conversely, in order to transfer the sample rack 32, shown on the left-hand side, from conveyor portion 11 to the basket 23, a step block 33 is provided to position the stop surface of the sample rack 32, shown on the left-hand side, slightly lower than the upper surface of the conveyor belt 34 of the conveyor portion 11. By using this configuration, the above-described benefits can be realised.

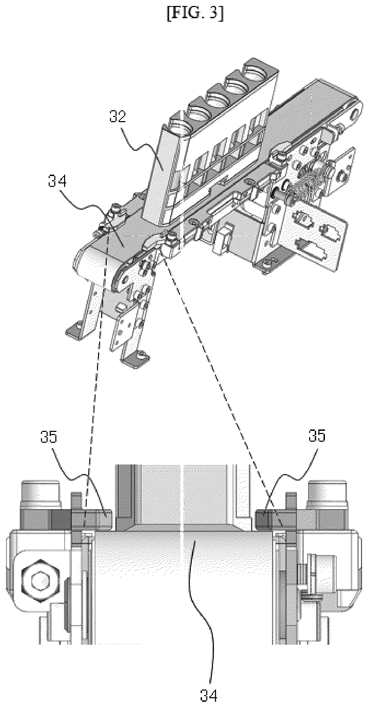

FIG. 3 is a view of a belt lift-up prevention mechanism 35 of the conveyor portion 11 of the modular rack lifting equipment 100. The belt lift-up prevention mechanism is provided so that, when the sample rack 32 is moved to the conveyor portion 11 by the traverser 12 due to deflection or floating of the conveyor belt 34 of the conveying unit 11, the rack 32 does not catch on the conveyor belt 34, and conversely, so that the step in the transfer from the conveyor portion 11 is not needlessly large.

The belt lift-up prevention mechanism 35 includes a protrusion, and is provided in a position at which it does not interfere when the sample rack 32 is moved to the conveyor portion 11 by the traverser 12, and at which it does not interfere with the conveying of the sample rack 32. The protrusion which protrudes from a portion above the side surface of the conveyor belt 34 is a guide that suppresses the lifting-up of the conveyor belt 34.

The conveyor belt 34 normally forms a loop with end portions thereof connected. As a consequence, the connection portion is thicker than other parts of the belt. The belt lift-up prevention mechanism 35 is particularly effective when the connection portion happens to coincide with the conveyor path of the conveyor portion 11.

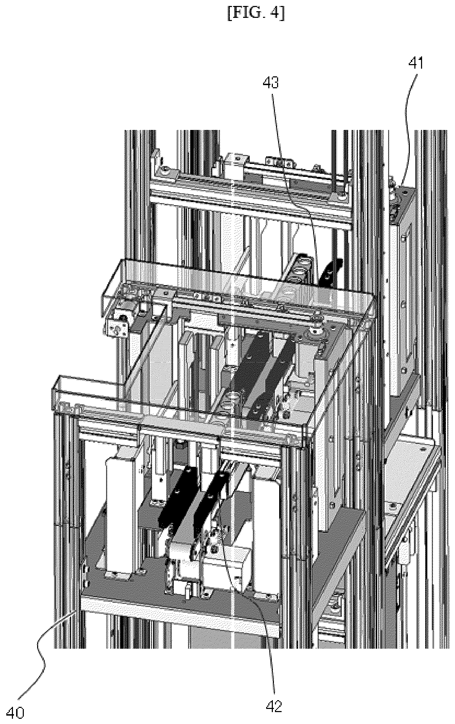

FIG. 4 is a partial view of a structure formed by linking together the modular rack lifting equipment 100. The structure is adjusted such that an upper surface of the conveyor portion 11 in a conveyor unit 42 of the conveyor unit of first modular rack lifting equipment 40 and an upper surface of the conveyor portion 11 of a conveyor unit 43 of second modular rack lifting equipment 41 are at the same height, the structure also being fixed together by fastening together connector components that are fastened to the respective supporting bodies 1. By connecting the modular rack lifting equipment in this way, it is possible to flexibly configure a system that can convey sample racks in a target height direction.

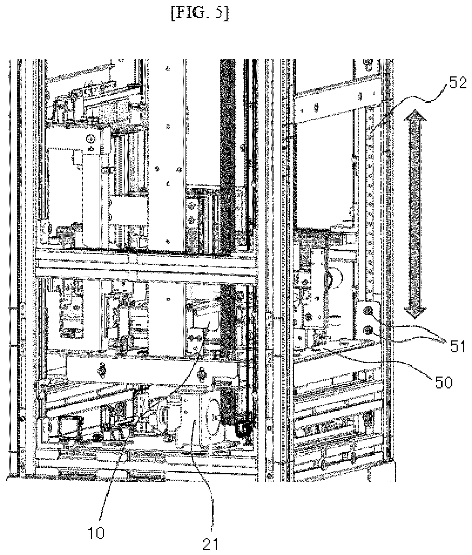

FIG. 5 shows a height position adjustment mechanism for the conveyor unit 10 of the modular rack lifting equipment 100. As shown in FIG. 5, in the conveyor unit 10 disposed at the lower level of the modular rack lifting equipment 100, the traverser 12 and the conveyor portion 11 of the sample rack 32 are attached to a same baseplate 50, being fixed to said baseplate 50 in a height adjustable manner by a plurality of bolts 51 and bolt receivers 52. As such, the height of the conveyor unit 10 can be adjusted, thus allowing free adjustment of the conveyor path length in the height direction.

The sample rack lifting equipment of the prior art was configured such that the entire conveyor unit 10, including the motor 21 and conveyor belt pulley, were lifted and lowered. On the other hand, with the modular rack lifting equipment 100 of the present invention, the heavy and bulky motor 21 and the like are fixed to the support body 1, and do not affect the height adjustment of the conveyor unit 10. It is therefore easier to make height adjustments. If both the fixtures of the conveyor unit 10 of lower-level part shown in FIG. 5 and that of the upper-level part have the same structure, it is possible to adjust the conveyor path length in the height direction from both the top and bottom sides, thus increasing to the degree of freedom of the adjustment.

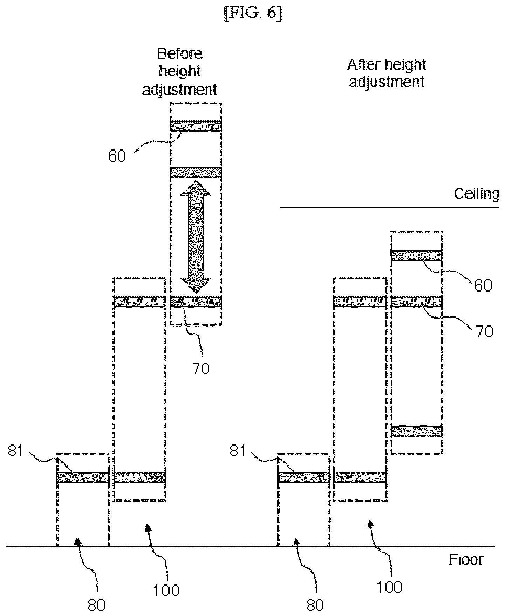

FIG. 6 shows a modular rack lifting system composed of linked pieces of the modular rack lifting equipment 100 in which the heights have been changed using the above-described height position adjustment mechanism of the conveyor units 10 of the pieces of modular rack lifting equipment 100. Since the height-direction positions of the conveyor units 10 can be appropriately and easily adjusted to the positions denoted by 60, 70, it is possible to take into consideration the floor space and ceiling height of the installation space and adjust the conveyor heights to suit the location, making use of a plurality of the modular rack lifting equipment 100 adjusted to have a uniform length in the height direction. Of note here, the modular rack lifting equipment 100 is connected to and used together with sample processing equipment 80 and a rack conveyor path 81.

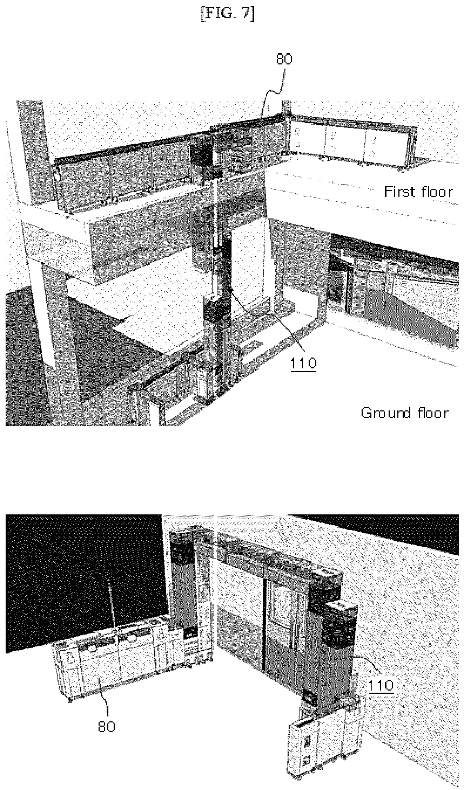

FIG. 7 shows an example layout of a rack lifting system 110 in which a plurality of modular rack lifting equipment 100 has been linked.

The upper part of FIG. 7 shows an example in which pieces of the modular rack lifting equipment 100 are connected to configure a height-direction conveyor path from a ground floor to a first floor where the sample processing equipment 80 is located. With such an arrangement, it is possible to effectively utilise the floor space, and efficiently implement the conveying and processing of the samples.

The lower part of the figure shows an example in which the modular rack lifting equipment 100 and a conventional conveyor route have been linked to configure a conveyor route that utilises the space around a door without interfering with the opening and closing of the door. By using the modular rack lifting equipment of standardised size according to this embodiment of the present invention, it is thus possible to realise a flexible system for conveying samples to a freely selected height.

### Description of symbols

- 1: Support body
- 10: Conveyor unit
- 11: Conveyor portion
- 12: Traverser
- 20: Lifting unit
- 21: Motor
- 22: Belt drive
- 23: Basket
- 30: Control unit
- 31: Guide rails
- 32: Sample rack
- 33: Step block
- 34: Conveyor belt
- 35: Belt lift-up prevention mechanism
- 36: Power supply
- 40: First modular rack lifting equipment
- 41: Second modular rack lifting equipment
- 42: Conveyor unit of first modular rack lifting equipment
- 43: Conveyor unit of second modular rack lifting equipment
- 50: Baseplate
- 51: Bolt
- 52: Height adjustment bolt receiver
- 60: Upper conveyor unit
- 70: Lower conveyor unit
- 80: Sample processing equipment
- 100: Modular rack lifting equipment
- 110: Rack lifting system configured from a plurality of linked modular rack lifting equipment

## Claims

1. Modular rack lifting equipment (100) comprising: a lifting unit (20) including a basket (23) loadable with a rack (32) for holding sample containers and a drive mechanism (21,22) for lifting and lowering the basket (23);
a conveyor unit (10) including a conveyor portion (11) for conveying racks (32) in a horizontal direction and a traverser (12) for moving the racks (32) loaded into the basket (23) to the conveyor portion (11); and
a support body (1) for supporting the lifting unit (20) and the conveyor unit (10), **characterised in that**
a plurality of modular rack lifting equipment (100) are configured in a linkable manner, so that the conveyor path is flexibly extended in the height direction.

2. The modular rack lifting equipment (100) according to claim 1, **characterised in that** the drive mechanism (21,22) is a belt drive (22) configured with a motor unit (21) of the belt drive (22) fixed to the support body (1) so that the basket (23) alone is lifted and lowered.

3. The modular rack lifting equipment (100) according to claim 1, **characterised in that** the conveyor unit (10) is attached to the support body (1) in a manner that allows adjustment of a height-direction position.

4. The modular rack lifting equipment (100) according to claim 1, **characterised in that** the conveyor unit (10) includes a step block (33) for adjusting a height of the traverser (12), the step block (33) allowing a stop surface of the basket (23) to be set at a height above a height of the conveyor portion (11), or allowing the stop surface of the basket (23) to be set at a height below a height of the conveyor portion (11).

5. The modular rack lifting equipment (100) according to claim 1, **characterised in that** the conveyor unit (10) includes a belt lift-up prevention mechanism (35) for suppressing upward movement of a conveyor belt (34) of the conveyor portion (11), the belt lift-up prevention mechanism (35) being provided at a position that avoids interference when sample racks (32) are moved onto the conveyor portion (11) by the traverser (12) and that avoids interference with conveying of sample racks (32).

6. A rack lifting system (110) configured by linking a plurality of the modular rack lifting equipment (100) according to any one of claims 1 to 5.

7. The rack lifting system (110) according to claim 6, wherein positions of the conveyor units (10) of the modular rack lifting system (110) are adjustable, and a target lifting height suitable for an installation location is achieved.

8. Modular rack lifting equipment (100) according to claim 1 **characterised in that** the conveyor portion (11) that allows racks (32), which have been loaded into the basket (23) via a connection portion, to be conveyed in a horizontal direction between different modular rack lifting equipment (100) when side portions of the support bodies of a plurality of the modular rack lifting equipment (100) have been linked.

9. The modular rack lifting equipment (100) according to claim 8, **characterised in that** height-direction lengths of the plurality of modular rack lifting equipment (100) are all roughly the same.

10. The modular rack lifting equipment (100) according to claim 8, **characterised in that** the driving mechanism lifts and lowers the baskets (23) by driving a belt between pulley mechanisms provided at upper and lower ends of the support body (1).

11. The modular rack lifting equipment (100) according to claim 8, **characterised in that** the conveyor portions (11) on the support bodies (1) are attachable at positions of varying heights.

## Patentansprüche

1. Modulare Regalhebeausrüstung (100), umfassend: eine Hebeeinheit (20), die einen Korb (23), der mit einem Regal (32) zum Halten von Probenbehältern beladbar ist, und einen Antriebsmechanismus (21, 22) zum Heben und Senken des Korbs (23) einschließt;
eine Fördereinheit (10), die einen Förderabschnitt (11) zum Fördern von Regalen (32) in einer horizontalen Richtung und eine Traverse (12) zum Bewegen der in den Korb (23) geladenen Regale (32) zu dem Förderabschnitt (11) einschließt; und
einen Stützkörper (1) zum Stützen der Hebeeinheit (20) und der Fördereinheit (10), **dadurch gekennzeichnet, dass**
mehrere modulare Regalhebeausrüstungen (100) in einer verknüpfbaren Weise konfiguriert sind, sodass der Förderweg in der Höhenrichtung flexibel verlängert wird.

2. Modulare Regalhebeausrüstung (100) nach Anspruch 1, **dadurch gekennzeichnet, dass** der Antriebsmechanismus (21, 22) ein Riemenantrieb (22) ist, der mit einer Motoreinheit (21) des Riemenantriebs (22) konfiguriert ist, die an dem Stützkörper (1) befestigt ist, sodass der Korb (23) allein gehoben und gesenkt wird.

3. Modulare Regalhebeausrüstung (100) nach Anspruch 1, **dadurch gekennzeichnet, dass** die Fördereinheit (10) an dem Stützkörper (1) in einer Weise angebracht ist, die eine Einstellung einer Höhenrichtungsposition ermöglicht.

4. Modulare Regalhebeausrüstung (100) nach Anspruch 1, **dadurch gekennzeichnet, dass** die Fördereinheit (10) einen Stufenblock (33) zum Einstellen einer Höhe der Traverse (12) einschließt, wobei der Stufenblock (33) ermöglicht, dass eine Anschlagfläche des Korbs (23) auf eine Höhe über einer Höhe des Förderabschnitts (11) fixiert wird, oder ermöglicht, dass die Anschlagfläche des Korbs (23) auf eine Höhe unter einer Höhe des Förderabschnitts (11) fixiert wird.

5. Modulare Regalhebeausrüstung (100) nach Anspruch 1, **dadurch gekennzeichnet, dass** die Fördereinheit (10) einen Mechanismus (35) zur Verhinderung des Anhebens des Förderbandes aufweist, um eine Aufwärtsbewegung eines Förderbandes (34) des Förderabschnitts (11) zu unterbinden, wobei der Mechanismus (35) zur Verhinderung des Anhebens des Förderbandes an einer Position vorgesehen ist, die eine Behinderung verhindert, wenn Probenregale (32) durch die Traverse (12) auf den Förderabschnitt (11) bewegt werden, und die eine Behinderung des Transports von Probenregalen (32) verhindert.

6. Regalhebesystem (110), das durch Verknüpfen mehrerer modularer Regalhebeausrüstungen (100) nach einem der Ansprüche 1 bis 5 konfiguriert ist.

7. Regalhebesystem (110) nach Anspruch 6, wobei Positionen der Fördereinheiten (10) des modularen Regalhebesystems (110) einstellbar sind und eine Soll-Hebehöhe, die für einen Installationsort geeignet ist, erreicht wird.

8. Modulare Regalhebeausrüstung (100) nach Anspruch 1, **dadurch gekennzeichnet, dass** der Förderabschnitt (11), der ermöglicht, dass Regale (32), die über einen Verbindungsabschnitt in den Korb (23) geladen wurden, in einer horizontalen Richtung zwischen verschiedenen modularen Regalhebeausrüstungen (100) transportiert werden, wenn Seitenabschnitte der Stützkörper mehrerer modularer Regalhebeausrüstungen (100) verknüpft wurden.

9. Modulare Regalhebeausrüstung (100) nach Anspruch 8, **dadurch gekennzeichnet, dass** Höhenrichtungslängen der mehreren modularen Regalhebeausrüstungen (100) alle ungefähr gleich sind.

10. Modulare Regalhebeausrüstung (100) nach Anspruch 8, **dadurch gekennzeichnet, dass** der Antriebsmechanismus die Körbe (23) durch Antreiben eines Riemens zwischen Riemenscheibenmechanismen, die an oberen und unteren Enden des Stützkörpers (1) vorgesehen sind, hebt und senkt.

11. Modulare Regalhebeausrüstung (100) nach Anspruch 8, **dadurch gekennzeichnet, dass** die Förderabschnitte (11) an den Stützkörpern (1) an Positionen unterschiedlicher Höhen befestigt werden können.

## Revendications

1. Équipement de levage de portoir modulaire (100) comprenant : une unité de levage (20) comprenant un panier (23) pouvant être chargé avec un portoir (32) pour maintenir des récipients d'échantillon et un mécanisme d'entraînement (21, 22) pour lever et abaisser le panier (23) ;
une unité de convoyage (10) comprenant une partie de convoyage (11) pour convoyer des portoirs (32) dans une direction horizontale et un dispositif de transfert (12) pour déplacer les portoirs (32) chargés dans le panier (23) jusqu'à la partie de convoyage (11) ; et
un corps de support (1) pour supporter l'unité de levage (20) et l'unité de convoyage (10), **caractérisé en ce que**
une pluralité d'équipements de levage de portoir modulaires (100) sont conçus de manière à pouvoir être reliés, de sorte que le trajet de convoyage est extensible de manière flexible dans la direction de la hauteur.

2. Équipement de levage de portoir modulaire (100) selon la revendication 1, **caractérisé en ce que** le mécanisme d'entraînement (21, 22) est un entraînement par courroie (22) conçu avec une unité de moteur (21) de l'entraînement par courroie (22) fixée au corps de support (1) de sorte que le panier (23) seul est levé et abaissé.

3. Équipement de levage de portoir modulaire (100) selon la revendication 1, **caractérisé en ce que** l'unité de convoyage (10) est attachée au corps de support (1) d'une manière qui permet l'ajustement d'une position dans la direction de la hauteur.

4. Équipement de levage de portoir modulaire (100) selon la revendication 1, **caractérisé en ce que** l'unité de convoyage (10) comprend une cale étagée (33) pour ajuster une hauteur du dispositif de transfert (12), la cale étagée (33) permettant à une surface d'arrêt du panier (23) d'être placée à une hauteur au-dessus d'une hauteur de la partie de convoyage (11), ou permettant à la surface d'arrêt du panier (23) d'être placée à une hauteur en dessous d'une hauteur de la partie de convoyage (11).

5. Équipement de levage de portoir modulaire (100) selon la revendication 1, **caractérisé en ce que** l'unité de convoyage (10) comprend un mécanisme de prévention de soulèvement de courroie (35) pour supprimer le mouvement vers le haut d'une courroie de convoyage (34) de la partie de convoyage (11), le mécanisme de prévention de soulèvement de courroie (35) étant fourni au niveau d'une position qui évite les interférences lorsque les portoirs d'échantillons (32) sont déplacés sur la partie de convoyage (11) par le dispositif de transfert (12) et qui évite les interférences avec le convoyage des portoirs d'échantillons (32).

6. Système de levage de portoir (110) conçu en reliant une pluralité des équipements de levage de portoir modulaires (100) selon l'une quelconque des revendications 1 à 5.

7. Système de levage de portoir (110) selon la revendication 6, dans lequel les positions des unités de convoyage (10) du système de levage de portoir modulaire (110) sont ajustables, et une hauteur de levage cible adaptée à un emplacement d'installation est obtenue.

8. Équipement de levage de portoir modulaire (100) selon la revendication 1 **caractérisé en ce que** la partie de convoyage (11) qui permet aux portoirs (32), qui ont été chargés dans le panier (23) par l'intermédiaire d'une partie de liaison, d'être convoyés dans une direction horizontale entre différents équipements modulaires de levage de portoir (100) lorsque des parties latérales des corps de soutien d'une pluralité des équipements modulaires de levage de portoir (100) ont été reliées.

9. Équipement modulaire de levage de portoir (100) selon la revendication 8, **caractérisé en ce que** les longueurs dans la direction de la hauteur de la pluralité d'équipements de levage de portoir modulaires (100) sont toutes approximativement identiques.

10. Équipement modulaire de levage de portoir (100) selon la revendication 8, **caractérisé en ce que** le mécanisme d'entraînement lève et abaisse les paniers (23) en entraînant une courroie entre des mécanismes de poulie fournis au niveau des extrémités supérieure et inférieure du corps de support (1).

11. Équipement de levage de portoir modulaire (100) selon la revendication 8, **caractérisé en ce que** les parties de convoyage (11) sur les corps de support (1) peuvent être attachées au niveau de positions de hauteurs variables.
